# EUROPEAN PATENT APPLICATION

(11) **EP 2 159 626 A1**
(43) Date of publication of application: **03.03.2010**
(21) Application number: 09000279.1
(22) Date of filing: 12.01.2009
(51) Int. Cl.: G02F 1/13

(54) **Flat screen assembly**

(30) Priority: 26.08.2008 CN 200820146870 U
(71) Applicant: Shenzhen TCL New Technology Ltd., Nanshan District Shenzhen Guangdong 518067 (CN)
(72) Inventor: Bertho, Dominique, 49320 Vauchretien (FR); Perrier, Jacques, 49100 Angers (FR); Bresteau, Eric, 49112 Pellouailles les Vignes (FR)
(74) Representative: Frese-Göddeke, Beate

(57) **Abstract**

A flat screen assembly comprises a flat screen panel (P) and a housing with at least a rear cover (1), a front cover (2) and a connection means. The connection means comprises at least one connecting element (C) which, in an assembled position, is fixed to the flat screen panel (P) and to the rear cover (1). The connecting element (C) comprises at least one spring, which, in the assembled position, engages a corresponding snapping means of the front cover (2).

## Description

### BACKGROUND OF THE INVENTION

### FIELD OF THE INVENTION

The present invention is related to a flat screen assembly which comprises a flat screen panel and a housing with at least a rear cover, a front cover and a connections means. Flat screen assemblies are used for computers and TV apparatuses.

### DESCRIPTION OF THE PRIOR ART

A flat screen assembly, mentioned as a display apparatus, is described in the US 2002/0080297 A1. The display apparatus comprises a flat screen panel, namely an LCD panel and a panel support, and a housing with a front cover and a rear cover. It also comprises a connection means, namely with at least one coupling and at least one rib. The coupling extends from one of either a rear surface of the front cover or a front faces of the rear cover toward the other thereof, having a groove formed on its plane. The rib is formed by the other thereof and is engaged with the groove of the coupling.

The couplings and the ribs extending alongside of the LCD panel still need a certain amount of space. The couplings and the ribs are parts of the housing and connect the front cover and the rear cover by a limited snapping force.

In the US 2003/0227581 A1 a similar flat screen assembly, mentioned as a display apparatus, is described. Its connection means comprises added reinforcement elements, which need an additional amount of space between the LCD panel and the front cover.

A thin display apparatus known from the US 2004/0012729 A1 comprises a separate LCD frame provided around a LCD panel, a plurality of first combining parts formed on peripheral sides of the LCD frame and a plurality of second combining parts formed on the plane of the LCD frame. A front cover is placed in front of the LCD panel, covering sides of the LCD panel and is combined to one of the first and second combining parts. A rear cover is placed behind the LCD panel and is combined to the other one of the combining parts. The front and rear cover are made of a conductive metal.

The separate LCD frame needs a significant amount of space between the LCD panel and the front cover. In addition, screws are visible on the front cover, which is formed with a plurality of through holes for the screws in order to couple the front cover to the LCD frame.

US 2003/0189681 A1 describes a structure for mounting a flat display module with a LCD display module, a rear cover and a front cover. The structure includes a supporting member for fixing the LCD display module within the rear cover. The supporting member comprises a supporting part which is plane-contacted with the rear side of the LCD display module, a horizontal guide portion which is vertically bent from the lateral side of the supporting part and a vertical guide portion which is vertically bent from the upper side of the supporting part. A joining part and a position guiding tab are bent upward from the end of the vertical guide portion.

These two parts need a gap between the LCD module and the rear cover. Due to the gap, a frame of the front cover is enlarged. The front cover is separately secured by a side mounting structure or a hook to the LCD display module.

### SUMMARY OF THE INVENTION

It is therefore desirable to improve a flat screen assembly according to the preamble of claim 1, in order to simplify the mounting of the assembly. In addition, it is desirable to improve a flat screen assembly with respect to a good contact between the parts of the housing itself and between the housing parts and the flat screen panel and with respect to a small gap between the flat screen panel and the housing.

According to the invention this can be achieved by the features of claim 1. Possible advantageous developments of the invention are specified in the dependent claims.

A flat screen assembly of the invention comprises a flat screen panel, e.g. a LCD panel, and a housing with a rear cover, a front cover and a connection means. The connection means comprises at least one connecting element which, in an assembled position, is fixed to the flat screen panel and to the rear cover. According to the invention the connecting element is equipped with at least one spring, which, in the assembled position, engages a snapping means of the front cover.

As an advantage of the invention, only one connecting element with a spring is used in order to connect all three parts, the flat screen panel, the rear cover and the front cover. As a result, the mounting of the assembly is improved and the gap between the flat screen panel and the housing is minimized. A small gap enables a desirable small frame portion of the front cover.

Due to the spring of the connecting element, which engages the snapping means of the front cover, it is possible to apply a certain pressure between the front cover and the assembly of the flat screen panel and the rear cover. This ensures a good contact between the housing parts itself and between the housing parts and the flat screen panel.

In a preferred embodiment of the invention, the connecting element is generated as a plate, of which at least a side portion extends parallel to a side of the flat screen panel between the side and a skirt portion of the front cover. The side portion of the plate is provided with one opening for each spring. The spring is generated as a wire spring which extends through the opening or just in front of the opening. The use of the plate and the wire spring enables a very thin gap between the flat screen panel and the front cover.

Preferably, the wire spring, in an assembled position, applies pressure to the snapping means in the direction vertical to the screen area. Pressure vertical to the screen area ensures a good contact between the flat screen panel and the front cover and, as a result, between the rear cover and the front cover.

In an unassembled position, the wire spring preferably extends in a direction parallel to the side of the flat screen panel and parallel to a screen area, while, in an assembled position with a snapping means, the wire spring is bent towards the snapping element into the direction vertical to the screen area and applies pressure to the snapping means in this direction.

In a preferred embodiment, the snapping means comprises a hook for each spring which, in the assembled position with the wire spring, protrudes into the opening of the plate. The combination of the plate, the opening and the wire spring with the hook of the front cover protruding into the opening, improves the very thin gap between the flat screen panel and the front cover.

Preferably, the plate comprises the edge portion at which, in an assembled position, the plate is fixed to the flat screen panel. The plate further comprises a rear portion, which extends from the side portion over the rear of the flat screen panel and at which, in an assembled position, the plate is fixed to the rear cover.

In an embodiment of the invention, the side portion is fixed to the flat screen panel beside the opening.

Preferably, the connecting element has at least two springs.

Preferably the connection means comprises at least two connecting elements arranged at opposite sides of the flat screen panel.

In an embodiment of the invention, the plates are generated by metal brackets.

### BRIEF DESCRIPTION OF THE DRAWINGS

The invention will be explained in more detail using one embodiment, which is illustrated in figures 1 to 8.

It shows:
Figure 1, a simplified perspective view of a flat screen panel with connecting elements of the embodiment of the invention showing two connecting elements, one with three springs;
Figure 2, a cut-out of a simplified perspective view of the flat screen panel with the connecting elements arranged on a front cover showing one of the springs;
Figure 3, a second cut-out of the simplified perspective view ending in a cross section of the flat screen panel with the connecting elements arranged on the front cover showing two of the springs;
Figure 4, a simplified cross section of the flat screen panel with the connecting elements arranged on the front cover showing one spring;
Figure 5, a cut-out of a simplified perspective view of the flat screen panel with the connecting elements according to figure 2, where the spring engages a snapping means of the front cover;
Figure 6, a second cut-out of the simplified perspective view ending in a cross section of the flat screen panel with the connecting elements according to figure 3, where one of the two springs engages the snapping means of the front cover;
Figure 7, a simplified cross section of the flat screen panel with the connecting elements according to figure 4, where the spring engages the snapping means of the front cover; and
Figure 8, a simplified cross section of the flat screen panel with the connecting elements in an assembled position with the front cover and the rear cover.

### DETAILED DESCRIPTION OF THE INVENTION

A flat screen assembly of an embodiment of the invention comprises a flat screen panel P, which is generated e.g. by a LCD panel, and a housing with at least a rear cover 1 and a front cover 2. The housing also comprises a connection means with at least one connecting element C provided with at least one spring. In particular, in a first embodiment the housing comprises four connecting elements C each with three springs.

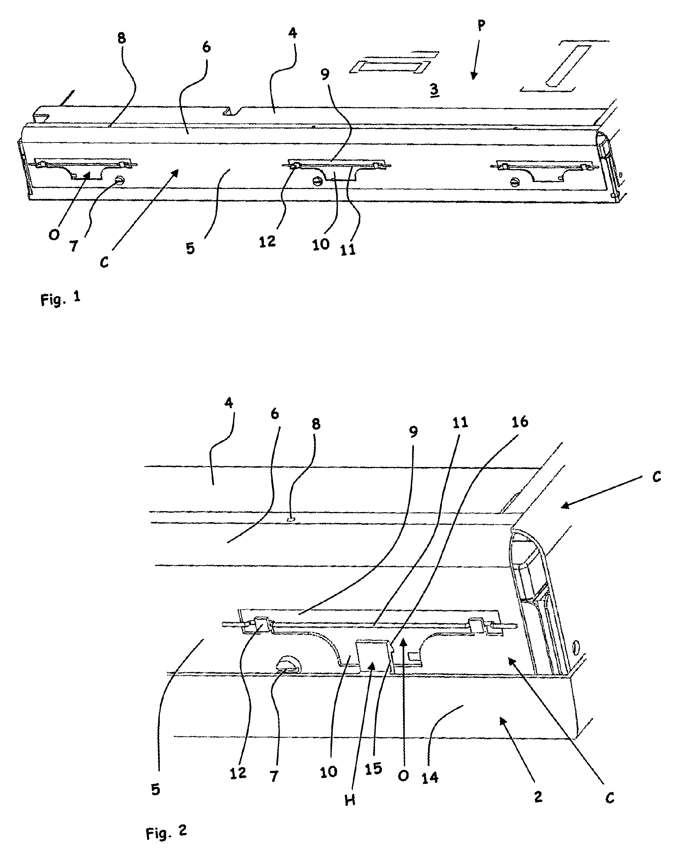

As shown in figure 1, the flat screen panel P has a body 3 which basically has the shape of a cuboid, and comprises further components 4, e.g. at the rear of the body 3. At each of the four sides of the flat screen panel P, namely of its body 3. one of the four connecting elements C is arranged.

Two of the connecting elements C are seen in figures 1, 2 and 5.

Each connecting element C is made by a thin plate with a side portion 5 extending in front of the corresponding side of the flat screen panel P and a rear portion 6 extending over the rear of the flat screen panel P.

In particular, the side portion 5 of the plate covers an essential amount of the side of the flat screen panel P and is provided with first holes for fixing the plate, i.e. the connection element C, to the flat screen panel P. Figure 1 shows screws 7, which fix the plate through the holes to the flat screen panel P.

The rear portion 6 of the plate is bent from the side portion 5 to the rear of the flat screen panel P and protrudes by a certain amount over the rear of the flat screen panel P. In its protruding region the rear portion 6 of the plate is provided with second holes 8 for fixing the plate i.e. the connecting element C to the rear cover 1.

The side portion 5 of the plate is provided with three openings O, i.e. one opening O for each spring, in which the spring is arranged. Each opening O has a rectangular top section 9 and a following rectangular bottom section 10. The lengths of the top section 9 and the bottom section 10 extend in the direction of the length of the corresponding side parallel to a screen area of the flat screen panel P. The length of the bottom section 10 is reduced in comparison to the length centrally of the top section 9. Since the bottom section 10 is arranged with respect to the top section 9, the opening O has the shape of a short T.

The spring is generated by a wire spring 11, which extends through or just in front of the opening O. In particular, the wire spring 11 extends in the region of the top section 9 in the direction of the length of the top section 9.

The connecting element C, i.e. the plate, is provided with fixing elements 12 for the springs, namely with two fixing elements 12 for one wire spring 11. The fixing elements 12 are arranged in the lateral regions of the top section 9 which protrude over the bottom section 10. Each fixing element 12 has the shape of a step. The wire spring 11 is provided with steps which correspond to the steps of the fixing elements 12. The fixing elements 12 and the wire spring 11 are built in a way that the wire spring 11 extends through the opening O or just in front of the opening O. In this embodiment, the wire spring 11 extends just in front of the opening O. The wire spring 11 is fixed at both ends by the fixing elements 12 and the plate in snapping connections.

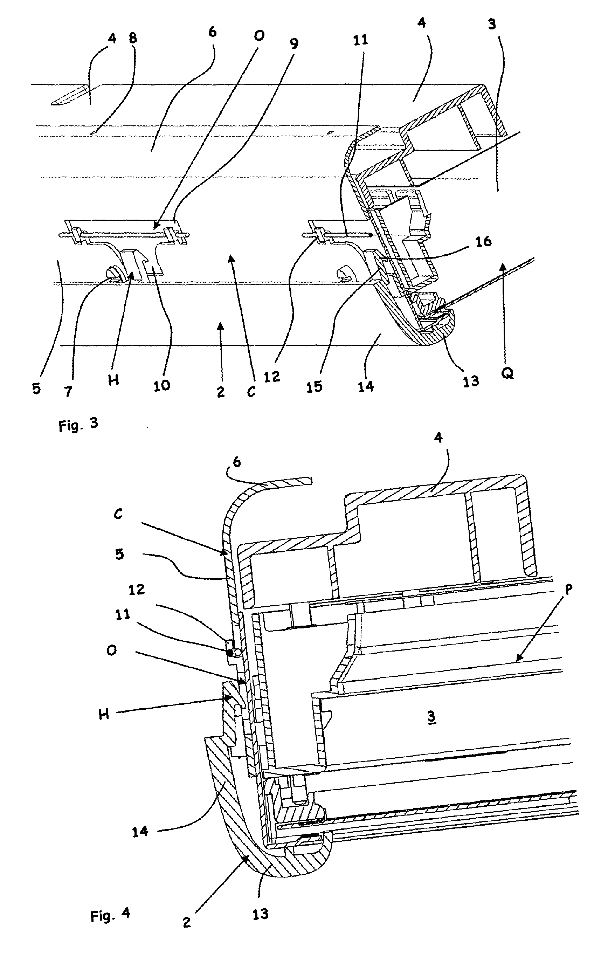

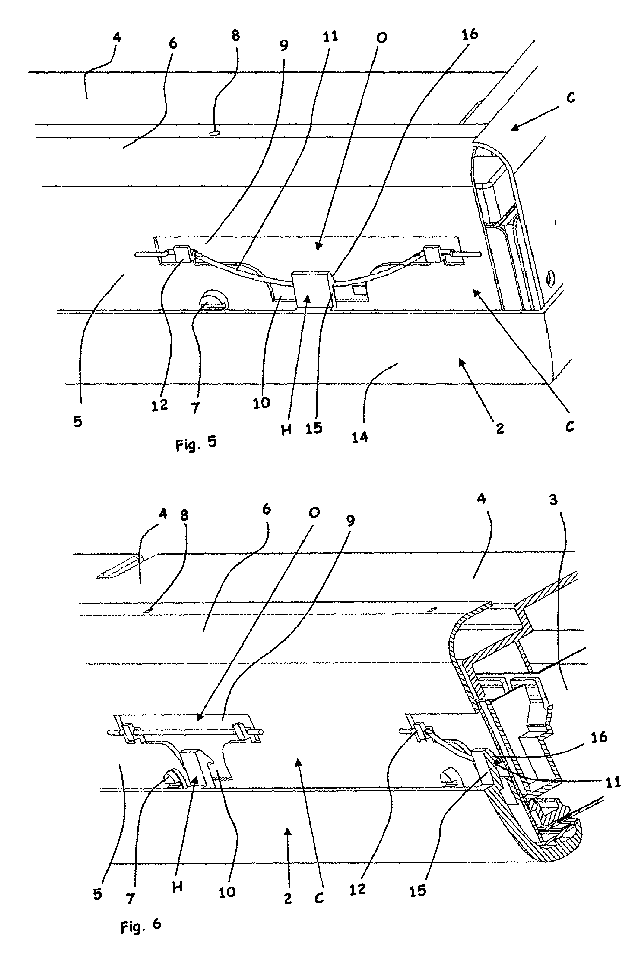

Figure 2, 3 and 4 show the flat screen panel P being arranged on the front cover 2. The front cover 2 has a frame portion 13 and a skirt portion 14. The frame portion 13 is not visible in figures 2 and 5 however it is visible in figures 3, 4, 6, 7 and 8. The skirt portion 14 of the front cover 2 is generated by four side walls which extend over the sides, namely over a third of the sides, of the flat screen panel P. As a result, the skirt portion 14 of the front cover 2 ends beneath the openings O, namely beneath the lower bottom section 10 of the openings O of the plate.

The front cover 2 is provided with a snapping means for each spring. The snapping means is generated as a hook H, i.e. one hook H is provided for each wire spring 11. Each hook H has a bar part 15 and a hook part 16. The bar part 15 extends from the upper end of the skirt portion 14 in front of a bottom section 10 of the corresponding opening O and ends beneath the wire spring 11. The hook part 16 protrudes into the bottom section 10 of the opening O.

The rear cover 1 has a bottom portion 18 and a wall portion 19, which corresponds to the skirt portion 14 of the front cover 2 and which is generated by four side walls. The side walls of the rear cover 1 extend over the sides, namely over two thirds of the sides, of the flat screen panel P and fit with the corresponding side walls of the front cover 2.

In an assembled position, each spring engages the corresponding snapping means of the front cover 2. In particular, the wire spring 11 engages the corresponding hook H. The wire spring 11 is bent toward the hook H and a middle part of the wire spring 11 is arranged beneath the hook part 16. The bent wire spring 11 applies a certain amount of pressure onto the hook part 16 in a direction vertical to the screen area.

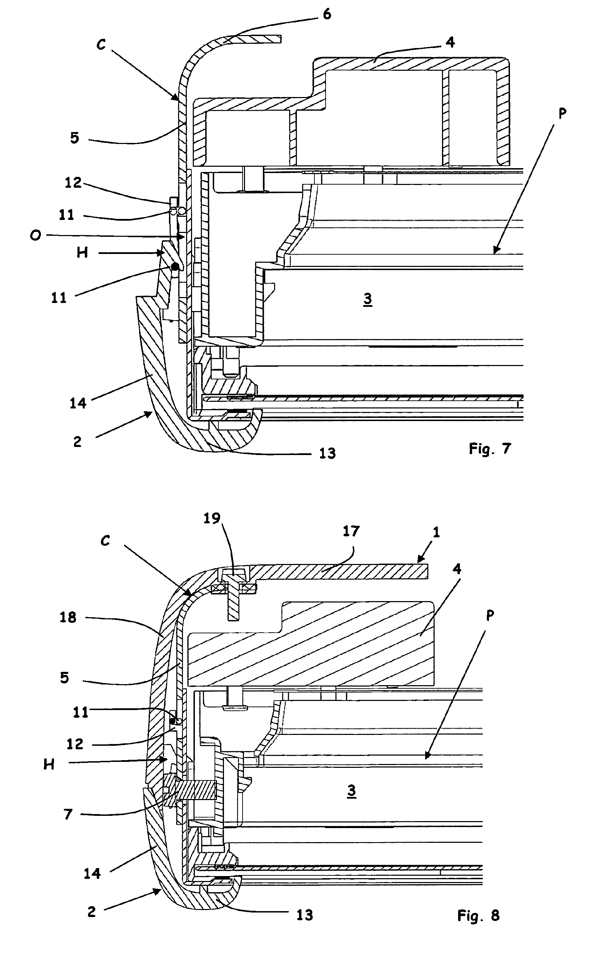

As shown in figure 8, the plate i.e. the connecting element C is fixed to the rear cover 1 by second screws 19, which protrude through the second holes 8. The pressure of the wire springs 11 onto the hooks H of the front cover 2 enables a good connection between the rear cover 1 and the front cover 2 and also between the flat screen panel P and the front cover 2.

In order to bend the wire springs 11 under the corresponding hook parts 17 a hand tool, e.g. with a groove, is used.

The connecting element C, i.e. the plates are generated as metal brackets and manufactured with punching tools and/or bending tools, namely with tools used by the metal part manufacturing. The thickness of a metal which is used for the plates ranges between 1,0 and 1,5 mm, and is e.g. 1 mm.

The rear cover 1 and the front cover 2 are generated by a Polystyrene.

The screen size of this embodiment ranges from 19" to 50" or more.

In a second embodiment, a flat screen assembly with a small flat screen panel P, namely with a screen size of e.g. 32", is used. The assembly is provided with four connecting elements C each with only two openings O and with two corresponding wire springs 11. As an alternative, an assembly with a small screen is provided with only two connecting elements C.

In a further embodiment, a flat screen assembly with a large screen is provided with connecting elements with four or more springs and with the corresponding openings O. As an alternative, an assembly with a large screen is provided with six or more connecting elements C.

As an alternative, the flat screen assembly has flat screen panel corresponding to the plasma technology.

## Claims

1. A flat screen assembly comprising
a flat screen panel (P), a housing with at least a rear cover (1), a front cover (2) and a connection means,
the connection means comprises at least one connecting element (C) which, in an assembled position, is fixed to the flat screen panel (P) and to the rear cover (1), where the connecting element (C) comprises at least one spring, which, in the assembled position, engages a corresponding snapping means of the front cover (2).

2. A flat screen assembly according to claim 1, **characterized in that** the connecting element is generated as a plate, of which at least a side portion (5) extends parallel to a side of the flat screen panel (P) between the side and a skirt portion (14) of the front cover (2) and which is provided with an opening (O) for each spring, while the spring is generated as a wire spring (11) which extends through the opening (O) or just in front of the opening (O).

3. A flat screen assembly according to claim 1 or 2, **characterized in that** the wire spring (3), in the assembled position, applies pressure to the snapping means in a direction of a screen area.

4. A flat screen assembly according to claim 2 or 3, **characterized in that,** in an unassembled position, the wire spring (11) extends in a direction parallel to the side of the flat screen panel (P) and parallel to a screen area, while, in an assembled position with the snapping means, the wire spring (11) is bent towards the snapping means in the direction vertical to the screen area.

5. A flat screen assembly according to one of the claims 2 to 4, **characterized in that** the snapping means comprises one hook (H) for each wire spring (11) which, in the assembled position with the wire spring (11), protrudes into the opening (O) of the plate.

6. A flat screen assembly according to one of the claims 2 to 5, **characterized in that** the plate comprises the side portion (5) at which, in an assembled position, the plate is fixed to the flat screen panel (P) and a rear portion (6), which extends from the side portion (5) over the rear of the flat screen panel (P) and at which, in an assembled position, the plate is fixed to the rear cover (1).

7. A flat screen assembly according to claim 6, **characterized in that** the side portion (5) is fixed to the flat screen panel (P) beside the opening (O).

8. A flat screen assembly according to one of the claims 1 to 7, **characterized in that** connecting element (C) has at least two springs.

9. A flat screen assembly according to one of the claims 1 to 8, **characterized in that** the connection means comprises at least two connecting elements (C) arranged at opposite sides of the flat screen panel (P).

10. A flat screen assembly according to one of the claims 2 to 9, **characterized in that** the plates are generated by metal brackets.
